# DEMANDE DE BREVET EUROPEEN

(11) **EP 1 154 183 A1**
(43) Date de publication de la demande: **14.11.2001**
(21) Numéro de dépôt: 01401182.9
(22) Date de dépôt: 09.05.2001
(51) Int. Cl.: F16L 9/06, F16L 11/11, F16L 59/14

(54) **Pipeline double enveloppe à résistance améliorée au flambage**

(30) Priorité: 29.11.2000 FR 0015386; 10.05.2000 FR 0005968
(71) Demandeur: ITP, 78430 Louveciennes (FR)
(72) Inventeur: Marchal, Philippe, 78430 Louveciennes (FR)
(74) Mandataire: Célanie, Christian

(57) **Abrégé**

L'invention concerne un pipeline 1 destiné au transport d'effluents au fond de la mer, comportant une enveloppe interne 3 et au moins une enveloppe externe 2 séparée de l'enveloppe interne par un espace annulaire 7 dans lequel est disposée une plaque 4 de matériaux isolant.

L'enveloppe externe 2 présente un ensemble de cannelures 5 espacées les unes des autres et réparties au moins sur une partie de sa surface et dont leur fond est en appui sur un élément intercalaire disposé autour de l'enveloppe interne 3. Les cannelures 5 sont réparties sur toute la longueur de l'enveloppe externe 2 et ont une profondeur comprise entre 1 et 10% de la valeur du diamètre extérieur de l'enveloppe externe 2.

## Description

Le secteur technique de la présente invention est celui des pipelines ou conduites immergés au fond de la mer et destinés au transport d'effluents.

Il est bien connu d'utiliser des pipelines à enveloppe simple ou multiple pour transporter des effluents au fond de la mer.

Le plus souvent, les pipelines double enveloppe comportent un isolant inséré entre les deux enveloppes afin de diminuer les pertes thermiques. A titre documentaire, on pourra se reporter au brevet FR-A-2 746 891 déposé antérieurement par le demandeur. Le pipeline décrit procure d'excellentes performances en matière d'isolation. Mais ce pipeline reste lourd, car il comporte deux enveloppes en acier dans sa configuration préférée. Ceci peut être pénalisant lors des opérations de convoyage et surtout de pose où la masse supportée par le navire en mer peut devenir rédhibitoire par rapport aux équipements montés sur ce navire, comme par exemple les tensionneurs.

Dans le cas des poses en mer profonde, le problème de la masse peut également devenir limitant pour les pipelines à simple enveloppe.

Quelle que soit la réalisation du pipeline, on sait que pour une enveloppe ou un tube rond idéal la pression d'écrasement sous l'effet de la pression hydrostatique est toujours nettement supérieure à la pression de flambage réellement constatée. Cette réduction est due aux imperfections de fabrication telles que l'ovalisation du tube, les méplats, les variations d'épaisseur, etc.

Le besoin se fait sentir actuellement de disposer de pipelines offrant une masse allégée sans pour autant compromettre leur capacité à résister aux sollicitations mécaniques et sans altérer leur résistance au flambage et à la pression hydrostatique.

Il est d'autre part évident qu'une réduction de l'épaisseur de la paroi des tubes mis en jeu pourrait amener des réductions de coûts, directs et indirects, significatives.

L'état de l'art actuel préconise l'utilisation de raidisseurs (dénommés "buckle arrestors" en vocable anglais) quand les épaisseurs de paroi des tubes sont inférieures à celles exigées par les codes. Or, ces raidisseurs étant en général des pièces rapportées qu'il faut souder au tube principal, on ne peut économiquement les utiliser pour empêcher l'initiation d'un flambage : ils ont pour fonction de limiter la propagation du flambage en cas d'initiation due à une imperfection plus grande que prévue (par exemple ovalisation excessive lors de la pose).

C'est pourquoi le but de la présente invention est de fournir un nouveau pipeline, à double enveloppe ou multi-enveloppe, présentant une masse fortement allégée pour une même résistance à l'écrasement, ou inversement offrant une augmentation très appréciable de la résistance au flambage pour une même épaisseur globale de paroi d'enveloppe.

L'invention a pour objet un pipeline destiné au transport d'effluents au fond de la mer, comportant une enveloppe interne et au moins une enveloppe externe séparée de l'enveloppe interne par un espace annulaire dans lequel est disposée une couche de matériaux isolant, caractérisé en ce que l'enveloppe externe présente un ensemble de cannelures espacées les unes des autres et réparties au moins sur une partie de sa surface et dont leur fond est en appui sur un élément intercalaire disposé autour de l'enveloppe interne.

Selon une première réalisation, les cannelures sont réparties sur toute la longueur de l'enveloppe externe.

Selon une autre réalisation du pipeline, les cannelures ont une profondeur comprise entre 1 et 10% de la valeur du diamètre extérieur de l'enveloppe externe.

Selon une autre caractéristique du pipeline, les cannelures présentent à leur base une largeur en fond de gorge sensiblement comprise entre 1 millimètre et 30% de la valeur du diamètre extérieur de l'enveloppe externe.

Selon une autre caractéristique du pipeline, les cannelures sont disposées de manière concentrique par rapport à l'axe longitudinal XX dudit pipeline.

Selon encore une autre caractéristique de l'invention, les cannelures sont disposées sensiblement en section suivant un cercle.

Selon une variante de réalisation, les cannelures sont espacées les unes des autres d'une distance (d) sensiblement comprise entre 0,25 et 3 fois le diamètre extérieur de l'enveloppe externe.

Selon une autre caractéristique de l'invention, les cannelures sont réalisées sous forme d'une spirale de pas sensiblement comprise entre 0,25 et 3 fois le diamètre extérieur de l'enveloppe externe.

Selon une variante de réalisation, l'élément intercalaire peut être constitué par un matériau isolant, par exemple un matériau microporeux à pores ouverts.

Le pipeline peut comporter une plaque métallique fine appliquée contre l'isolant, les cannelures de l'enveloppe adjacente prenant appui sur cette plaque.

Selon une autre variante de réalisation, l'élément intercalaire est constitué par un anneau plastique déformable élastiquement.

Un tout premier avantage de l'invention réside dans l'amélioration de la résistance au flambage du pipeline et donc de la possibilité de réduire les épaisseurs de la ou des enveloppes utilisées.

Un autre avantage de cette réalisation réside dans la reprise d'efforts de cisaillement entre les deux enveloppes lorsque le matériau isolant est comprimé par les cannelures de l'enveloppe externe sur l'enveloppe interne.

Un autre avantage encore réside dans l'absence de moyens annexes pour passer l'effort axial entre les enveloppes.

D'autres caractéristiques, détails et avantages de l'invention ressortiront plus clairement à la lecture du complément de description donné ci-après à titre indicatif en relation avec les dessins sur lesquels :
- la figure 1 représente une coupe longitudinale d'un pipeline double enveloppe avec un matériau intercalaire,
- la figure 2 représente une coupe partielle d'un pipeline multi-enveloppe extérieure,
- la figure 3 représente une coupe partielle d'un pipeline double enveloppe avec un autre matériau intercalaire, et
- la figure 4 représente une coupe partielle d'un pipeline multi-enveloppe avec un autre matériau intercalaire,
- la figure 5A représente une coupe partielle d'un autre mode de réalisation du pipeline, et
- la figure 5B représente une coupe partielle d'un autre mode de réalisation du pipeline.

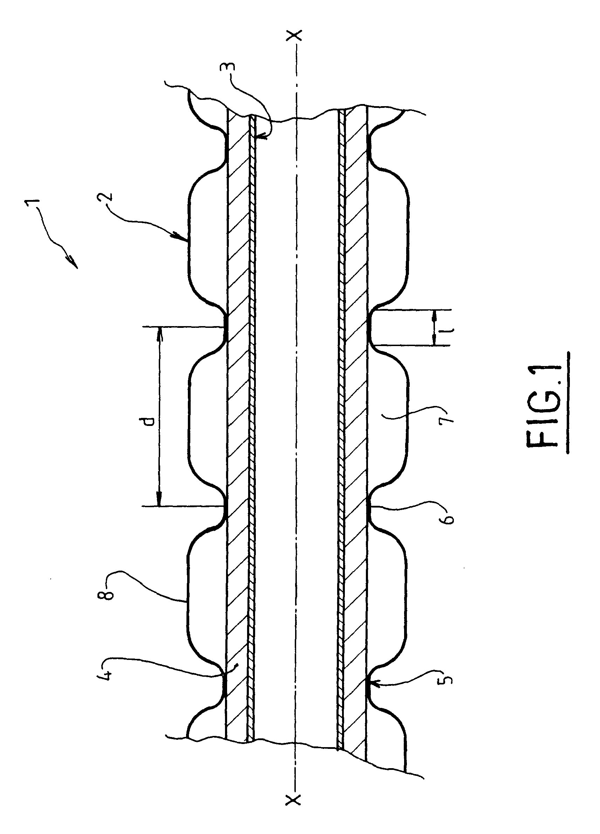

Suivant un mode de réalisation de l'invention représenté sur la figure 1, le pipeline 1 est constitué de deux enveloppes (ou tubes) 2 et 3, l'une 3 interne véhiculant l'effluent, l'autre externe 2. Ces deux enveloppes sont disposées concentriquement et sont séparées par un espace annulaire 7. Ce dernier en combinaison avec une couche 4 d'un matériau isolant permet d'isoler l'enveloppe interne 3 afin de réduire les pertes de calories. Cette réalisation est classique et on peut se reporter au brevet antérieur FR-2 746 891 au nom du demandeur pour plus de précision.

Suivant l'invention, on déforme périodiquement l'enveloppe externe 2 de manière annulaire en y appliquant une pression pour réaliser des cannelures 5, en opérant de l'extérieur. Le fond des cannelures est donc directement dans cet exemple en contact avec l'élément intercalaire 4 constitué ici par le matériau isolant thermique. L'enveloppe externe 2 est donc alors constituée d'une succession de bombages 8 séparés par les cannelures 5.

Ces cannelures jouent le rôle de raidisseurs et permettent de s'affranchir des codes d'ingénierie conventionnels que l'homme de l'art doit appliquer pour concevoir un pipeline. On peut donc utiliser des enveloppes d'épaisseur plus faible, donc de masse allégée, tout en conservant une résistance suffisante par rapport aux sollicitations mécaniques.

On obtient ainsi une structure sandwich dans laquelle l'enveloppe externe est liée mécaniquement par l'intermédiaire de l'élément intercalaire à l'enveloppe externe. La résistance à la pression hydrostatique est assurée dans cette configuration par la combinaison des deux enveloppes et non pas par chaque enveloppe séparément.

Ces cannelures peuvent être réalisées de manière variée. Une manière particulièrement économique consisterait, à titre indicatif, à mettre en oeuvre une machine décrite dans le brevet FR-2 786 713 au nom du demandeur, incorporant un patin de déformation conformé à la forme prévue pour la cannelure, que l'on vient appliquer contre l'enveloppe qui serait ainsi déformée par effet de pression. Ladite machine présente bien entendu l'avantage d'être utilisée au cours de l'assemblage du pipeline quelle que soit sa forme de réalisation.

Sur la figure, on voit que le fond 6 de chaque cannelure 5 vient en contact avec le matériau intercalaire 4. Cette réalisation s'avère d'autant plus avantageuse lorsqu'on utilise un matériau intercalaire présentant une bonne résistance à l'écrasement comme c'est le cas des isolants thermiques du type microporeux à base de matière céramique et préférentiellement à base de silice comme décrit dans le brevet cité précédemment. Il va de soi que l'isolant thermique peut être déformé faiblement ou de manière importante lors de la réalisation des cannelures.

Bien entendu, les cannelures peuvent présenter des formes variées. A titre d'exemple, la largeur (1) d'une cannelure 5 peut être comprise entre 1 millimètre et 10 centimètres lorsqu'elle présente un profil régulier et la distance (d) entre deux cannelures consécutives peut être comprise entre environ un quart du diamètre de l'enveloppe cannelée et trois fois ce diamètre.

A titre d'exemple particulier, on peut réaliser un pipeline 1 constitué d'une enveloppe interne 3 de 273 mm de diamètre extérieur et d'épaisseur 12,7 mm, d'une enveloppe externe 2 de 324 mm de diamètre extérieur et d'épaisseur 6,35 mm, délimitant un espace annulaire 7 de 19 mm avant déformation dans lequel on a disposé un isolant microporeux, par exemple de 15 mm d'épaisseur, on peut réaliser des cannelures profondes de 10 mm, larges de 4 mm en fond de gorge, et espacées de 30 cm environ. On constate d'après cet exemple que les fonds 6 viennent compresser de manière avantageuse le matériau isolant. Les deux enveloppes peuvent alors constituer une enceinte étanche. Des tests ont permis de mesurer que l'enveloppe externe 2 d'un tel pipeline résiste à une pression de flambage de l'ordre de 13.10⁶ Pa. Le même tube démuni de cannelures présente une résistance au flambage de l'ordre de 40 à 50.10⁵ Pa. Ce résultat permet de concevoir des pipelines avec des tolérances beaucoup moins strictes au niveau des enveloppes. Bien entendu, le pipeline 1 peut être utilisé pour véhiculer les effluents vers la terre ferme sans modification de structure et pas nécessairement au fond de la mer.

Dans l'exemple décrit ci-dessus, on a schématisé des cannelures 5 réalisées sensiblement de manière concentrique avec un profil régulier par rapport à l'axe XX du pipeline. Il va sans dire que ces cannelures pourraient être réalisées de manière inclinée par rapport à l'axe XX ou bien de manière excentrique.

En variante, on peut encore espacer les cannelures 5 et/ou les bombages 8 de manière régulière et/ou irrégulière, avec des profondeurs différentes.

De même encore, on a décrit des cannelures 5 selon une courbe fermée. Il va sans dire que ces cannelures pourraient être réalisées suivant une courbe ouverte, par exemple une spirale.

Pour un pipeline à double enveloppe où l'enveloppe interne est réalisée en un matériau d'un coût élevé (par exemple réalisé en Invar® ou en titane), on peut avantageusement réduire l'épaisseur des deux enveloppes grâce à la mise en place d'un ensemble de cannelures adapté décrit précédemment.

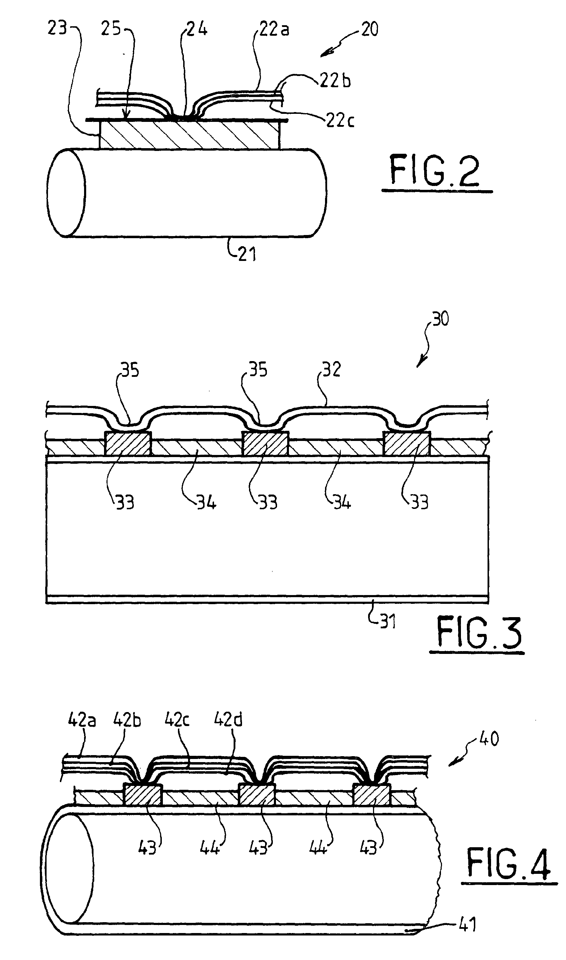

Sur la figure 2, on a représenté un pipeline 20 constitué d'une enveloppe interne 21 et d'un ensemble d'enveloppes externes 22a, 22b, 22c. Un matériau intercalaire 23 est interposé autour de l'enveloppe interne 21 et les cannelures 24 (une seule est représentée) prennent appui sur cet élément intercalaire. Dans cet exemple le matériau intercalaire 23 est identique à celui utilisé dans l'exemple 1.

Sur la figure 3, on a représenté un pipeline 30 constitué d'une enveloppe interne 31 et d'une enveloppe externe 32. Le matériau intercalaire est ici constitué d'un certain nombre d'anneaux en élastomère 33 séparant les plaques de matériau isolant 34. On voit sur la figure que les cannelures 35 prennent ici appui sur les anneaux 33 et non pas sur l'isolant 34. Les anneaux sont placés au droit des cannelures et sont constitués de matière plastique déformable, mais présentent une bonne résistance à la compression et une mémoire de forme suffisante pour conserver un appui constant sur les cannelures en dépit du retour élastique inhérent à la déformation de l'enveloppe externe ou des enveloppes externes. Les anneaux 33 sont par exemple constitué de caoutchouc tel un polymère d'éthylène propylène diène monomère, un élastomère de polyuréthanne, du polypropylène, du TEFLON®, du NYLON®.

Sur la figure 4, on a représenté un pipeline 40 constitué d'une enveloppe interne 41 et d'un ensemble d'enveloppes externes 42a, 42b, 42c, 42d. Le matériau intercalaire est ici constitué d'un certain nombre d'anneaux 43 séparant les plaques de matériau isolant 44. On voit sur la figure que les cannelures 45 prennent ici appui sur les anneaux 43 et non pas sur l'isolant. Bien entendu, lorsque les enveloppes externes sont multiples, il va de soi que leur épaisseur respective est adaptée. On adoptera une épaisseur globale des enveloppes externes du même ordre de grandeur que l'épaisseur d'une enveloppe unique telle que décrite en relation avec les figures 1 et 3.

Suivant l'invention, on relie mécaniquement les enveloppes entre elles. L'enveloppe interne normalement destinée au transport du fluide participe également activement à la résistance vis-à-vis des efforts de pression hydrostatique. Ainsi, la combinaison de ces enveloppes participe à l'ensemble des caractéristiques du pipeline. Cette nouvelle conception permet de réaliser des pipelines plus légers en réduisant l'épaisseur des enveloppes. Cette structure sandwich proposée pour la première fois dans ce secteur technique permet de traduire les effets de la pression hydrostatique sur l'ensemble et non plus au niveau de chaque enveloppe. Il n'est donc plus nécessaire de dimensionner chaque enveloppe à la pression hydrostatique.

Le sertissage ainsi obtenu du tube extérieur (ou des tubes extérieurs) sur le matériau intercalaire ou isolant thermique, lui-même alors comprimé sur le tube interne permet de passer de l'effort axial (tension) entre les enveloppes sans avoir recours à des moyens annexes.

Sur la figure 2, le matériau 23 de protection thermique est recouvert à l'aide d'une plaque métallique fine 25, de l'acier par exemple. Une plaque d'une épaisseur de l'ordre de 0,1 à 1 mm convient parfaitement. Outre la protection du matériau 23, la plaque métallique est nécessairement flambée localement lors des déformations de l'enveloppe externe (ou des enveloppes), ce qui présente l'avantage de faciliter la création d'un libre passage du fluide gazeux, l'air par exemple, entre deux bombages consécutifs et donc entre les deux extrémités du pipeline. Ce libre passage peut être mis éventuellement sous pression réduite pour accroître les performances de l'isolant thermique. Il faut noter que ce libre passage existe également lorsque les cannelures sont appliquées directement sur les couches de matériau isolant thermique ou sur les espaceurs en raison des imperfections de la surface interne de l'enveloppe externe.

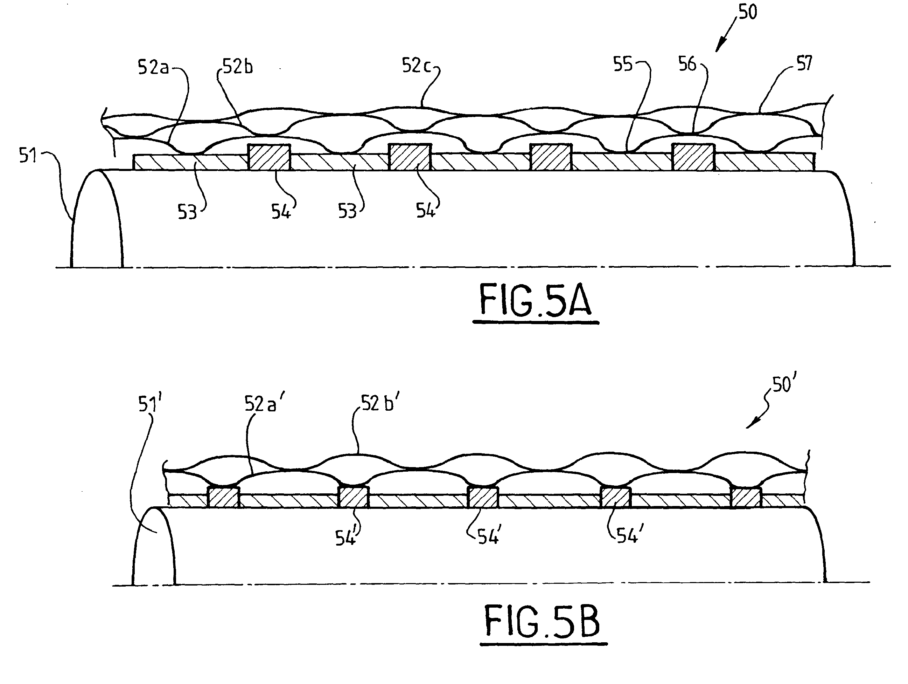

Sur la figure 5A, on a représenté une variante de réalisation du pipeline 51 selon l'invention suivant laquelle chacune des trois enveloppes extérieures est déformée de manière alternée. Ainsi, on voit que l'enveloppe intérieure 51 est munie de couches 53 de matériau isolant thermique séparées par des espaceurs 54. Dans cette réalisation, la première enveloppe extérieure 52a est munie de cannelures 55 en appui sur l'isolant thermique, la seconde enveloppe extérieure 52b de cannelures 56 en appui sur les bombages de la première enveloppe 52a, la troisième enveloppe extérieure 52c de cannelures 57 en appui sur les bombages de la seconde enveloppe 52b.

En variante encore, les cannelures de la troisième enveloppe extérieure 52c pourraient être confondues avec celles de la seconde enveloppe.

Sur la figure 5B, on a représenté un pipeline 50' comportant une enveloppe interne 51' et deux enveloppes externes 52a' et 52b'. Suivant ce mode de réalisation, les cannelures de la première enveloppe 52a' sont en appui sur les espaceurs 54' et non pas sur les couches 53' de matériau isolant thermique. Les cannelures de la seconde enveloppe 52b' sont alors appliquées sur les bombages de la première enveloppe 52a' et ainsi de suite.

## Revendications

1. Pipeline (1) destiné au transport d'effluents au fond de la mer, comportant une enveloppe interne (3) et au moins une enveloppe externe (2) séparée de l'enveloppe interne par un espace annulaire (7) dans lequel est disposée une couche de matériaux isolant, **caractérisé en ce que** l'enveloppe externe (2) présente un ensemble de cannelures (5) espacées les unes des autres et réparties au moins sur une partie de sa surface et dont leur fond est en appui sur un élément intercalaire (4) disposé autour de l'enveloppe interne (3).

2. Pipeline selon la revendication 1, **caractérisé en ce que** les cannelures (5) sont réparties sur toute la longueur de l'enveloppe externe (2).

3. Pipeline selon la revendication 2, **caractérisé en ce que** les cannelures (5) ont une profondeur comprise entre 1 et 10% de la valeur du diamètre extérieur de l'enveloppe externe (2).

4. Pipeline selon la revendication 2 ou 3, **caractérisé en ce que** les cannelures (5) présentent à leur base une largeur en fond de gorge (1) sensiblement comprise entre 1 millimètre et 30% de la valeur du diamètre extérieur de l'enveloppe externe (2).

5. Pipeline selon l'une quelconque des revendications précédentes, **caractérisé en ce que** les cannelures (5) sont disposées de manière concentrique par rapport à l'axe longitudinal XX dudit pipeline.

6. Pipeline selon la revendication 5, **caractérisé en ce que** les cannelures (5) sont disposées sensiblement en section suivant un cercle.

7. Pipeline selon l'une quelconque des revendications précédentes, **caractérisé en ce que** les cannelures (5) sont espacées les unes des autres d'une distance (d) sensiblement comprise entre 0,25 et 3 fois le diamètre extérieur de l'enveloppe externe (2).

8. Pipeline selon l'une quelconque des revendications 1 à 7, **caractérisé en ce que** les cannelures (5) sont réalisées sous forme d'une spirale de pas sensiblement comprise entre 0,25 et 3 fois le diamètre extérieur de l'enveloppe externe (2).

9. Pipeline selon l'une quelconque des revendications précédentes, **caractérisée en ce que** l'élément intercalaire est constitué par le matériau isolant lui-même.

10. Pipeline selon la revendication 9, **caractérisé en ce que** le matériau isolant est un matériau microporeux à pores ouverts.

11. Pipeline selon l'une quelconque des revendications précédentes, **caractérisé en ce qu'**il comporte une plaque métallique fine (25) appliquée contre l'isolant thermique, les cannelures de l'enveloppe adjacente prenant appui sur cette plaque.

12. Pipeline selon l'une quelconque des revendications 1 à 8, **caractérisé en ce que** l'élément intercalaire est constitué par un anneau (33, 43) en matière plastique déformable élastiquement, par exemple un élastomère de polyuréthanne, du polypropylène, du TEFLON®, du NYLON®, un caoutchouc.
